# EUROPEAN PATENT APPLICATION

(11) **EP 0 822 054 A1**
(43) Date of publication of application: **04.02.1998**
(21) Application number: 97202101.8
(22) Date of filing: 08.07.1997
(51) Int. Cl.: B29C 47/40, B29B 7/48

(54) **Method and apparatus for mixing and continuous extrusion of polymer materials with dry pre-mixing of the material**

(30) Priority: 02.08.1996 IT MI961692
(71) Applicant: TECHINT COMPAGNIA TECNICA INTERNAZIONALE S.p.A., 20121 Milano (IT)
(72) Inventor: Canegallo, Stefano, Saronno (Varese) (IT)
(74) Representative: Raimondi, Alfredo, Dott. Ing. Prof.

(57) **Abstract**

Method for mixing polymers and fillers by means of a continuous machine (1) of the horizontal type with two parallel shafts (5,6), which comprises the following stages:
- supplying of the raw material to the said machine;
- feeding of the raw materials to a pre-mixing zone;
- dry pre-mixing of the raw materials;
- feeding of the mixture to a first mixing zone;
- mixing of the mixture;
- feeding of the homogenized mixture to the outlet of the machine and associated machine for implementing the method.

## Description

The present invention relates to a method for the mixing and continous extrusion of polymer materials, which comprises at least one stage involving dry pre-mixing of the components of the mixture and an associated twin-screw extruder suitable for implementing said method.

It is known how the processing of polymers involves a first stage consisting in preparation of the desired composition from the individual components, by means of mixing of a basic polymer which is charged with various additives so as to enhance certain characteristics with respect to others, thus determining the various types of final compound suitable in each case for the various uses.

The compound is then extruded in the formats desired for the various requirements.

These mixing and extrusion stages are performed by means of individual machines, called mixers and extruders respectively, which have particular technical characteristics specific for the type of operation to be performed; in particular it is required that the mixers should be versatile and easily adaptable for mixing different types of compounds and should allow control and adjustment of the mixing temperature as well as high productivity.

It is also known that attempts have been made to perform the double operation of mixing and extrusion using extruders of the type provided with two cooperating threaded shafts, some axial sections of which had threading sections replaced by shaft sections formed in the manner of actual mixer rotors, so as to obtain both feeding of the product towards the extrusion head and improved mixing thereof.

These types of machine, however, have some drawbacks which limit their use in practice, including: the poor mixing capacity; the lack of flexibility with a variation in the type of compound; the poor productivity; the difficulty in controlling the temperature.

In addition to this, said machines require a preliminary operation, external thereto, so-called pre-mixing of the raw materials, in order to supply the extruder with the basic components which are already mixed without melting or softening of the macromolecular material.

The technical problem which is posed, therefore, is that of providing a method for the processing of polymer materials (elastomers and plastomers) which allows optimum mixing of the polymers and fillers present therein using the basic components supplied separately so as to make the mixture thus obtained suitable for subsequent extrusion to be performed continuously, and a machine which is designed to implement said method and which combines the characteristics of flexibility, adaptability and productivity of the mixers with the possibility of performing extrusion without the need for operations external to the machine.

Within the scope of this technical problem, a further necessity is that said method and machine should provide the possibility of obtaining, in a single machine, complete mixing which comprises the following stages:
- reduction in the average diameter of the particles of the individual components of the mixture and incorporation of the particles thus reduced in the macromolecular matrix (dispersive mixing) and
- uniform distribution and homogenization of the particles inside the mixture (distributive mixing);
- maintenance of optimum control over the temperature of the mixture during all the mixing stages;
and which allows one to maintain unaltered the profile of the threaded mixing shafts with a variation in the various types of material.

Said technical problems are resolved according to the present invention by a method for mixing polymers and fillers by means of a continuous machine of the horizontal type with two parallel shafts, which comprises at least the following stages:
- supplying of the raw materials to the said machine;
- feeding of the raw materials to a pre-mixing zone;
- dry pre-mixing of the raw materials;
- feeding of the mixture to a first mixing zone;
- mixing of the mixture;
- feeding of the homogenized mixture to the outlet of the machine.

The present invention also relates to a machine for implementing the said method which comprises a mixing chamber having housed inside it two parallel shafts, at least one section of which has a configuration suitable for dry mixing of the components of the mixture and at least one section of which has a configuration suitable for mixing of the mixture with melting thereof.

Further details may be obtained from the following description of the method and the machine according to the invention provided by way of a non-limiting example with reference to the accompanying drawings, in which:
Figure 1 shows a cross-sectional view of the machine along a vertical longitudinal plane;
Figure 2 shows a schematic sectional view of the machine according to Fig. 1 along a horizontal longitudinal plane;
Figure 3 shows a cross-section along the plane indicated by III-III in Fig. 1;
Figure 4 shows a cross-section along the plane indicated by IV-IV in Fig. 1.

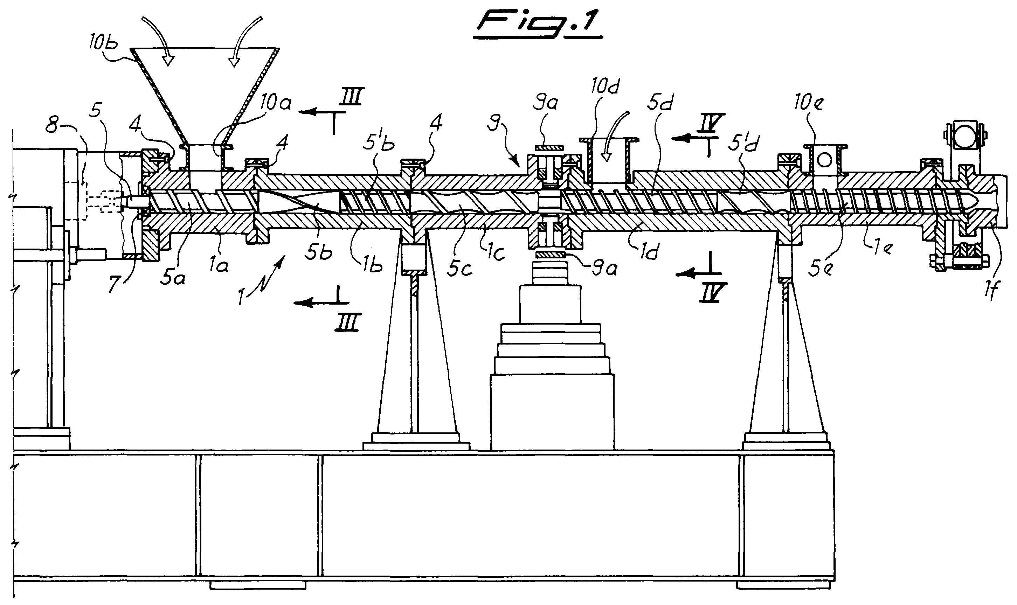

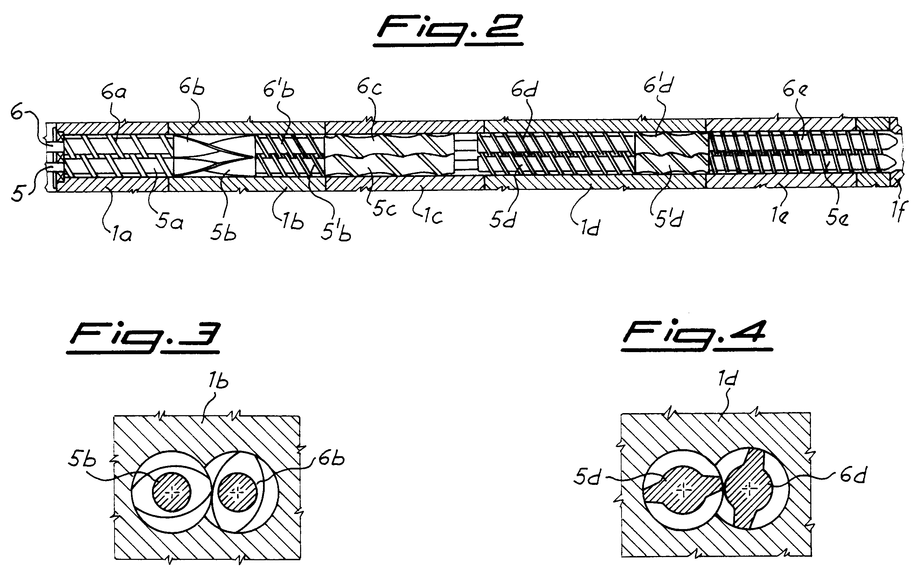

The method for extruding polymers according to the invention is based on the fact that it has been experimentally determined that, in order to obtain a good dispersion of products consisting of aggregates of basic particles, it is necessary to perform preliminary disintegration of the aggregates and then homogenization in the polymeric matrix of the basic particles thus obtained.

In addition to this, it has been noted that the disintegration of the aggomerates is much easier when the viscosity of the polymeric matrix is high and that, on the other hand, it becomes all the more difficult and slower the lower the viscosity of the polymeric material.

The method for mixing a polymeric compound charged with additives of various types by means of a continuous extruder of the type with two parallel shafts according to the present invention comprises the following stages:
- separate supplying of the raw materials to the extrusion machine;
- feeding of the raw materials to a pre-mixing zone;
- dry pre-mixing of the raw materials;
said pre-mixing stage, as will emerge more clearly below, is performed by means of sections of the extruder shafts, formed as mixing rotors and under controlled temperature conditions. The action of disintegration of the agglomerates takes place owing to the presence of polymer which is in the still rigid (non-melted) state; in this way the particles, accelerated by the rotors, collide with each other and against the walls of the extruder chamber, transmitting kinetic energy to the aggregrates of basic particles which are thus disintegrated;
- feeding of the pre-mixed mixture to a first mixing section which may for example be performed by means of rotor-type sections of the two shafts;
- adjustment of the opening of the valve for constriction of the aperture of the mixing chamber, arranged along the mixture feeding path downstream of said first mixing section;
the adjustment of said valve allows the aperture of the chamber for mixing the mixture to be kept more or less open, thus determining the filling level of this chamber and hence the time interval during which the mixture remains in the said first mixing zone, being processed.

The greater or lesser time during which the mixture remains in this first mixing zone therefore determines the moment, or the axial position inside the mixing chamber, where the mixture passes into the melted state, a moment which may therefore be controlled so that the mixture itself is still not in the completely melted state when it passes beyond the valve (valve open) or already in the completely melted state when the mixture passes beyond the valve (valve closed). Once it has passed beyond the first mixing stage the mixture may undergo different processing operations depending on the type of final compound which is to be obtained; if, in fact, the mixture is already complete after the first mixing operation it is merely fed towards the extrusion head; if, on the other hand, it is required to add further fillers then the method according to the invention comprises the following additional stages:
- supplying of the mixture fillers to the machine;
- feeding of the mixture to a second mixing zone;
- homogenization of the mixture;
- feeding of the homogenized mixture to the outlet of the machine.

Said method therefore enables improved working conditions to be obtained for the different types of mixtures; among these, the two following applications of the method itself are to be regarded as predominant, for which the following is respectively required:
a) concentrated starting mixtures: for which the quality of the product is defined mainly on the basis of the level of dispersion of the filler (pigment or the like) in the polymer and subsequently on the basis of the concentration of the filler itself; in this case it is preferable to operate with the valve open so as to increase the time during which the product is in the non-melted state and therefore obtain the best possible dispersion, prior to melting of the material with consequent reduction in the viscosity;
b) hypercharged or reinforced mixtures for which the quality of the end product is assessed first of all for the quantity of filler introduced and then in relation to the dispersion of the filler itself; in this case it is preferable to operate with the valve closed so that, at the moment of supplying of the filler, the mixture is already completely melted and the filler (or reinforcing agent) is wetted by the polymer in the melted state and hence so that, during the subsequent second mixing stage, said fillers are dispersed and the mixture homogenized.

As illustrated in the figures, the machine 1 according to the invention is composed of a series of elements 1a, 1b, 1c, 1d, 1e, 1f which are joined together in the longitudinal direction by means of screws 4 or the like so as to form a single mixing chamber of the desired length.

Said elements moreover have a different external shape depending on the position occupied in the sequence, a shape which also determines the different used of each section.

In particular the element 1a has an upper inlet 10a for the supplying of the mixture components which are supplied also independently in predetermined ratios through a loading hopper 10b.

The element 1d has in turn an inlet 10d for the optional introduction of special fillers or reinforcing agents or mixtures thereof and the element 1e has an inlet 10e for degassing of the compound, and finally the element 1f forms the element for connection to the actual extrusion head, not illustrated.

Inside the chamber thus formed there are mounted two parallel-axis and co-rotating shafts 5, 6 which are supported at their ends by bearings 7 and operated by motors 8 in a manner known per se and hence only schematically shown in the figures.

The two shafts 5 and 6 have in turn sections with a varied shape and cross-section in order to implement the different stages of the method described above during the path covered by the mixture from the inlet 10a to the outlet 1f.

More particularly, the two shafts have sections 5a,6a; 5'b,6'b; 5d,6d; 5e,6e formed in the manner of screws with different pitch and generatrices so that their interaction with one another and with the wall of the chamber causes feeding of the compound and simultaneous mixing thereof.

Alternately arranged with said threading sections there are also provided shaft sections 5b,6b; 5c,6c; 5'd,6'd formed in the manner of mixing rotors.

More particularly, the shaft section 5b,6b is provided in the mixing chamber section 1b immediately following the screw section 5a,6a necessary for gripping the material and drawing it towards the inside of the chamber 5 and then feeding it towards the outlet and has the form of a rotor with several blades of the type interacting in the tangential direction.

In this way, in the mixing chamber section 1b of the extruder, pre-mixing, or pre-blending of the mixture components is performed in conditions where the polymer is in the non-melted state, which results in a high efficiency of the process for disaggregation of the agglomerates of the fillers and hence an increased dispersion thereof, already during the first stage of feeding of the components inside the mixing chamber.

This section operates at a temperature which is much lower than the characteristic temperature for softening of the material being processed so as to ensure that the particles do not melt.

The rotor shaft section 5b is followed by further threading section 5'b by means of which the pre-mixed material is fed to the next shaft section 5c in turn consisting of a rotor profile so as to have optimum efficiency with the valve closed and limited efficiency with the valve open.

In this way the machine section 5c corresponding to the shaft section 5c,6c forms an actual continuous mixer in which as first mixing operation is performed under temperature and pressure conditions which are controlled and adjustable by means of suitable means known per se, of which only a valve 9 for adjusting the aperture of the mixing chamber is shown, said valve being arranged immediately downstream of said rotor section 5c.

Said valve 9 comprises elements 9a which can be operated in the radial direction and in either direction so as to cause greater/lesser closing of the aperture through which the material passes, said greater/lesser closing resulting in a greater/lesser time spent by the mixture in the chamber section 1c and therefore a greater/lesser degree of melting thereof.

Said adjustment is therefore performed in relation to the different type of mixture being processed and depending on whether, in the following chamber section 1d, a greater/lesser quantity of filler for the mixture itself is supplied.

With this configuration, the components supplied through the inlet 10a are drawn forwards by the action of the screws of sections 5a,5'b,5d, undergoing at the same time dry pre-mixing in the rotor section 5b, and preliminary mixing along the rotor section 5c, causing, by means of the valve 9, greater/lesser melting of the polymer material prior to its feeding towards the section 5'd in turn formed in the manner of a rotor, where definitive homogenization of the mixture occurs.

As can be understood from the above description, the assembly according to the present invention forms a single horizontal machine which performs mixing by means of sections forming actual continuous mixers designed to ensure greater productivity and versatility with processing parameters which can be easily regulated and the possibility of precise temperature control, forming at the same time a machine for supplying the extrusion head, to which the compound may be supplied, without discontinuity in the cycle, based on mixing of the raw materials, thus allowing greater adaptability of a predetermined configuration of the shafts 5 and 6 to the different types of mixture to be processed.

## Claims

1. Method for mixing polymers and fillers by means of a continuous machine of the horizontal type with two parallel shafts, characterized in that it comprises the following stages:
- supplying of the raw materials to the said machine;
- feeding of the raw materials to a pre-mixing zone;
- dry pre-mixing of the raw materials;
- feeding of the mixture to a first mixing zone;
- mixing of the mixture;
- feeding of the homogenized mixture to the outlet of the machine.

2. Mixing method according to Claim 1, characterized in that said pre-mixing is performed with a substantially dry product.

3. Mixing method according to Claim 1, characterized in that it comprises the following additional stages:
- supplying of the filler products to the machine downstream of said first mixing stage;
- feeding of the mixture obtained in the first mixing stage and the fillers to a second mixing section;
- homogenisation of the mixture;
- feeding of the homogenized mixture to the outlet of the machine.

4. Mixing method according to Claim 1, characterized in that it also comprises the additional stage of:
- adjustment of the opening of a valve for adjusting the aperture of the mixing chamber arranged along the mixture feed path,

5. Mixing method according to Claim 4, characterized in that said adjustment of the aperture of the mixing chamber is performed downstream of the first mixing zone.

6. Mixing method according to Claim 1, characterized in that during the first mixing stage the mixture is in an only partially melted state.

7. Mixing method according to Claim 3, characterized in that during the second mixing stage the mixture is in a totally melted state.

8. Machine for processing polymers, comprising a plurality of coaxial elements (1a, 1b, 1c, 1d, 1e, 1f) which are adjacent to one another and joined together, at least one of said sections having openings for supplying of the mixture components and at least one of said sections having an opening for supplying fillers for the mixture, said sections forming inside them a chamber (1a, 1b, 1c, 1d) extending longitudinally, inside which there is arranged a pair of coaxial and interacting shafts (5,6) having axial portions (5a,6a; 5b,6b; 5c,6c; 5d,6d; 5e,6e) correspondingly varied so as to form sections for feeding and mixing of the compound, characterized in that there is provided in combination;
- at least one chamber section (1b) adjacent to the section (1a) for entry of the components, where said shafts (5, 6) are configured in the manner of mixing elements designed for dry processing of the materials;
- at least one chamber section (1c), following said first section (1b), where the shafts (5, 6) are configured in the manner of a mixing rotor.

9. Machine according to Claim 8, characterized in that said mixing chamber section where the shafts (5, 6) have a rotor-like configuration is not adjacent to the said first chamber section for dry-processing of the mixture.

10. Machine according to Claim 8, characterized in that it comprises at least one third chamber section (1d) arranged downstream of the two preceding mixing sections (1b, 1c), where the shafts (5, 6) have a configuration designed for continuous mixing of the mixture.

11. Machine according to Claim 10, characterized in that, at said third chamber section (1d), the shafts (5,6) have a section (5d, 6'd) with a rotor-like configuration.

12. Machine according to Claim 8, characterized in that a valve (9) for adjusting the aperture of the chamber (1) is provided.

13. Machine according to Claim 12, characterized in that said valve is arranged immediately downstream of the second rotor section (5c, 6c) of the shafts (5, 6).

14. Machine according to Claim 8, characterized in that said shafts (5,6) have sections (5a,6a; 5'b,6'b; 5d,6d; 5e,6e), corresponding to the feeding sections, formed in the manner of screws interacting with one another.

15. Machine according to Claim 8, characterized in that said coaxial elements and said shafts are preferably arranged with the longitudinal axis horizontal.

16. Machine according to Claim 8, characterized in that it is an extrusion machine.
